# EUROPEAN PATENT SPECIFICATION

(11) **EP 1 330 909 B1**
(45) Date of publication and mention of the grant of the patent: **21.06.2006**
(21) Application number: 01978047.7
(22) Date of filing: 29.10.2001
(51) Int. Cl.: H04L 29/12

(54) **DOMAIN NAME PORTABILITY**
DOMÄNENNAMENPORTABILITÄT
PORTABILITE DE NOM DE DOMAINE

(30) Priority: 02.11.2000 US 703876
(43) Date of publication of application: 30.07.2003
(73) Proprietor: TELEFONAKTIEBOLAGET LM ERICSSON (publ), 164 83 Stockholm (SE)
(72) Inventor: FOTI, George, Dollard des Ormeaux, Québec H9G 2Z8 (CA); SURDILA, Sorin, St. Dorothee, Laval, Québec H7X 3N3 (CA)
(74) Representative: Tonscheidt, Andreas
(86) International application number: PCT/CA2001/001500
(87) International publication number: WO 2002/037788

(56) References cited:
- US-A- 5 751 961
- US-A- 5 987 508
- BONETTI P ET AL: "Distribution of RFC 1327 mapping rules via the Internet DNS: the INFNet distributed gateway system" , COMPUTER NETWORKS AND ISDN SYSTEMS, NORTH HOLLAND PUBLISHING. AMSTERDAM, NL, VOL. 27, NR. 3, PAGE(S) 461-469 XP004037979 ISSN: 0169-7552 the whole document

## Description

### BACKGROUND OF THE INVENTION

### Field of the invention:

The present invention relates to a method and system capable of rendering portable the IP (Internet Protocol) addresses of user stations in an IP space network.

### Brief description of the prior art:

Nowadays, in the internet world, the subscriber addresses are e-mail like (user@host). The host part contains a domain name that identifies the operator with which the subscriber has a subscription. However, when a subscriber changes his subscription to another operator, his subscriber address has to be changed as well to allow the subscriber to receive calls through the new operator. Such changes are inconvenient for subscribers.

In the future 3G multimedia cellular systems, the URL (Universal Resource Locator) address of a subscriber, for example his e-mail address where he can be reached or SIP URL (Session Initiation Protocol - Universal Resource Locator), usually bears the domain name of the operator with which the subscriber is registered. This is required in order to allow the operator to receive location updates when the subscriber is roaming and registers at a visited destination. In addition, this will allow calls to be routed to the home CSCF (Call Session Control Function) for that subscriber.

Binding between the operator domain and the subscriber address causes a problem whenever the subscriber changes from one operator to another. In fact, each operator change also requires a.change of address of the subscriber to reflect the domain name of the new operator. Otherwise, the subscriber will no longer receive calls or messages at his new home CSCF.

In general, subscribers like to retain their addresses as permanent. Regulations to that effect have been established in 2G (Local number portability).

US patent No. 5,890,063 granted to James L. Mills on March 30, 1999 describes a concept called "number portability". In accordance with this concept, a mobile subscriber is allowed to relocate or "port" form an existing service area to a new PLMN (Public Land Mobile Network) area without changing his mobile subscriber's assigned MSISDN (Mobile Station Integrated Services Digital Network) number or directory number. By not changing his assigned MSISDN number, the mobile subscriber needs not have his mobile station manually serviced to encode a new MSISDN number. The mobile subscriber also needs not inconveniently notify his friends and associates of his new MSISDN number.

In accordance with this concept of "number portability", whenever a mobile station is ported from a first HLR (Home Location Register) within a first PLMN, to a second HLR in a second PLMN, an operator is responsible for maintaining a centralised database is notified. The operator informs the centralised database with data correlating the MSISDN associated with the ported mobile station with the network address representing the second HLR. As a result, the correlation data are indexed and stored in the centralised database. An application module within the centralised database then transmits a signal downloading the updated data to the donor first HLR. This transmitted signal includes the MSISDN associated with the ported mobile station and the network address representing the second HLR. In a manner similar to handling an incoming signal, the specified MSISDN of the transmitted signal is analysed by the telecommunications network and the update signal is routed to the appropriate GMSC within the first PLMN. The GMSC (Gateway Mobile Switching Center), by analysing the received MSISDN forwards the update signal to the donor first HLR. The donor first HLR then stores the data correlating the ported MSISDN with the network address representing the second HLR In a register. The network address representing the second HLR also identifies the GMSC of the second PLMN serving the ported mobile station. As a result, for all mobile stations ported out of the donor first HLR, the centralised database and the first HLR both store the correlation information.

An incoming call to the ported mobile station is directed to the GMSC serving the first PLMN as indicated by the MSISDN included In the Called Party Number parameter. The GMSC then transmits a MAP (Mobile Application Part) based signal and a SRI (Send Routing Information) signal requesting routing information to the donor first HLR. The first HLR then determines that the mobile station associated with the specified MSISDN has been ported away from the first PLMN, and the stored network address representing the new second HLR is retrieved and transmitted back to the requesting GMSC via a return signal. In response to the network address representing the second HLR, the GMSC transmits the received IAM (Initial Address Message) over the mobile network with the received network address as the new Called Party Number.

Obviously, the system of US patent No. 5,890. 063 is not suited for domain name portability In the IP space. Accordingly, need exists for a solution in the IP space that would enable subscribers to maintain the same URL address regardless of the operator which whom they are affiliated.

The US Patent 5,751,961 is directed to an Integrated Service Control Point (ISCP) gateway that connects and ISCP to the internet. The ISCP generates Call-Processing Records (CPRs) for translating URL standards logical addresses into physical World Wide Web (www) addresses. In US Patent 5.751,961, a browser sends a request containing a logical address associated with a requested hyperlink to the ICP gateway, which forwards the request to the ISCP for translating the URL standard logical address of the request into a physical address which Is finally returned to the Web browser. The Web browser then requests a document identified by the physical address in the normal fashion. US Patent 5.751,961 fails to teach or suggest connecting a first user station with a second user station as claimed by the Applicant. Rather. US Patent 5.751.961 is limited to teaching how to request and obtain an HTTP document by translating information contained in the HTTP request for that document from a logical address into a physical address.

### OBJECTS OF THE INVENTION

An object of the present invention is to provide a solution for enabling subscribers to maintain, in an IP space network, the same address every time they subscribe with a new operator.

### SUMMARY OF THE INVENTION

More specifically, in accordance with the present invention, there is provided a method for directing, in an IP space network, a request message from a first user station to a second user station that has been ported from an old user address to a new user address, comprising: storing in a redirect server data correlating the old address of the second user station to the new address of this second user station, this redirect server having a redirect server address; sending the request message from the first user station in the IP space network, this request message including the old address of the second user station; detecting that the second user station has moved from the old address; providing the redirect server address in response to detection that the second user station has moved from the old address; directing the request message including the old address of the second user station to the redirect server address; finding, in the redirect server and from the old address of the second user station, the new address of the second user station; and redirecting the request message to the new address of the second user station found in the redirect server.

The solution for enabling subscribers to maintain, in an IP space network, the same address every time they register with a new operator therefore involves a redirect serverto which the request message is transmitted each time it is detected that a user station to be reached has moved from a user address included in the request message.

In accordance with preferred embodiments:
- the old user address and the new user address are URL addresses each comprising a domain name, and the redirect server is a domain redirect server;
- every time a user station is ported to a new URL address, the domain redirect server is updated by correlating in this domain redirect server an old URL address of the user station to the new URL address of this user station;
- the first user station has an URL- address with a domain name, and detecting that the second user station has moved from the old address comprises: sending the request message from the first user station to a first proxy server providing routing service for the first user station; sending from the first proxy server a query message including the domain name of the old address of the second user station to a domain name system; finding, in the domain name system and from the query message, a proxy server address of a second proxy server associated to the domain name of the old URL address of the second user station; sending the proxy server address of the second proxy server from the domain name system to the first proxy server; sending the request message from the first proxy server to the second proxy server; and finding, in the second proxy server, that the second user station has moved from the old URL address;
- providing the redirect server address comprises: supplying the redirect server address from the second proxy server.to the first proxy server in response to finding, in the second proxy server, that the second user station has moved from the old URL address;
- directing the request message to the redirect server address comprises sending from the first proxy server the request message to the domain redirect server; and
- redirecting the request message to the new URL address of the second user station found in the domain redirect server comprises, according to a first embodiment: sending the new U RL address of the second user station found in the domain redirect server to the first proxy server sending the request message from the first proxy server to a third proxy server associated to the domain name of the new URL address of the second user station; and sending the request message from the third proxy server to the second user station; and, according to a second embodiment: sending the request message from the domain redirect server to a third proxy server associated to the domain name of the new URL address of the second user station; and sending the request message from the third proxy server to the second user station.

The present invention also relates to a system for directing, in an IP space network, a request message from a first user station to a second user station that has moved from an old user address to a new user address. In this message redirecting system, a redirect server includes storage for data correlating the old address of the second user station to the new address of this second user station, that redirect server having a redirect server address. A first transmission sub-system between the first user station and the redirect server is supplied with the request message including the old address of the second user station, and comprises: a detector of the move of the second user station from the old address, this detector being supplied with the old address included in the request message; a server address supplier connected to the detector and giving, in response to detection of the move of the second user station from the old address, the redirect server address; and a first request message transmission path supplied with both the request message and the redirect server address from the supplier, connected to the redirect server, and supplying, in response to receiving the redirect server address, the request message to the redirect server. In the redirect server, a new address finder is supplied with the old address of the second user station included in the request message and finds, in response to this old user address and from the data stored in the redirect server, the new address of the second user station. Finally, a second transmission sub-system between the redirect server and the second user station is supplied with the request message including the new address of the second user station, and defines a second request message transmission path through which the request message is transmitted to the new address of the second user station.

The present invention further relates to a system for directing, in an IP space network, a request message from a first user station to a second user station that has been ported from an old user address to a new user address. This message directing system comprises: a redirect server for storing data correlating the old address of the second user station to the new address of the second user station, this redirect server having a redirect server address; means for sending the request message from the first user station in the IP space network, this request message comprising the old address of the second user station; means for detecting that the second user station has moved from the old address; means for providing the redirect server address in response to detection that the second user station has moved from the old address; means for directing the request message comprising the old address of the second user station to the redirect server address; means for finding, in the redirect server and from the old address of the second user station, the new address of that second user station; and means for redirecting the request message to the new address of the second user station found in the redirect server.

According to another aspect of the present invention, there is provided a method for directing, in an IP space network, a request message sent by a first user station to a second user station having a user address known as being portable and associated to a generic domain name, comprising: storing in a redirect server associated to the generic domain name data correlating the portable address of the second user station to a current user address of this second user station, this redirect server having a redirect server address; sending the request message from the first user station in the IP space network, this request message including the portable address of the second user station; detecting that the portable address of the second user station is associated to the generic domain name; providing the redirect server address in response to detection that the portable address of the second user station is associated to the generic domain name; directing the request message including the portable address of the second user station to the redirect server address; finding, in the redirect server and from the portable address of the second user station, the current address of that second user station; and redirecting the request message to the current address of the second user station found in the redirect server.

In accordance with preferred embodiments of this message directing method:
- the portable user address and the current user address are URL addresses each comprising a domain name, and the redirect server is a domain redirect server;
- every time a user station is ported to a new current URL address, the domain redirect server is updated by correlating a portable URL address of the user station to the new current URL address of this user station;
- the first user station has an URL address with a domain name, and detecting that the portable address of the second user station is associated to the generic domain name comprises: sending the request message from the first user station to a first proxy server providing routing service for the first user station; sending from the first proxy server a query message including the domain name of the portable URL address of the second user station to a domain name system; and finding in the domain name system that the portable URL address of the second user station is associated to the generic domain name;
- providing the redirect server address of the domain redirect server comprises: supplying the redirect server address of the domain redirect server from the domain name system to the first proxy server in response to finding, in the domain name system, that the portable URL address of the second user station is associated to the generic domain name;
- directing the request message to the redirect server address of the domain redirect server comprises sending from the first proxy server the request message to the domain redirect server;
- redirecting the request message to the current URL address of the second user station found in the domain redirect server comprises, according to a first alternative: sending the current URL address of the second user station found in the domain redirect server to the first proxy server; sending the request message from the first proxy server to a third proxy server associated to the domain name of the current URL address of the second user station; and sending the request message from the third proxy server to the second user station; and according to a second alternative: sending the request message from the domain redirect server to a third proxy server associated to the domain name of the current URL address of the second user station; and sending the request message from the third proxy server to the second user station.

The present invention still further relates to a system for directing, in an IP space network, a request message from a first user station to a second user station having a user address known as being portable and associated to a generic domain name, comprising a redirect server associated to the generic domain name and having storage for data correlating the portable address of the second user station to a current user address of this second user station, this redirect server having a redirect server address. A first transmission sub-system between the first user station and the redirect server is supplied with the request message including the portable address of the second user station, and comprises:
a detector of the association of the portable address of the second user station to the generic domain name;
a server address supplier connected to this detector and giving, in response to detection of the association of the portable address of the second user station to the generic domain name, the redirect server address; and
a first request message transmission path supplied with both the request message and the redirect server address from the supplier, connected to the redirect server, and supplying, in response to receiving the redirect server address, the request message to the redirect server.

In the redirect server, a new address finder is supplied with the portable address of the second user station included in the request message and finds, in response to this portable user address and from the data stored in the redirect server, the current address of the second user station. A second transmission sub-system between the redirect server and the second user station is supplied with the request message including the current address of the second user station and defines a second request message transmission path through which the request message is transmitted to the second user station.

Finally, the present invention relates to a system for directing, in an IP space network, a request message from a first user station to a second user station having a user address known as being portable and associated to a generic domain name, comprising:
a redirect server associated to said generic domain for storing data correlating the portable address of the second user station to a current user address of the second user station, this redirect server having a redirect server address;
means for sending the request message from the first user station in the IP space network, this request message comprising the portable address of the second user;
means for detecting that the portable address of the second user station is associated to the generic domain name;
means for providing the redirect server address in response to detection that the portable address of the second user station is associated to the generic domain name;
means for directing the request message comprising the portable address of the second user station to the redirect server address;
means for finding, in the redirect server and from the portable address of the second user station, the current address of the second user station; and
means for redirecting the request message to the current address of the second user station found in the redirect server.

The objects, advantages and other features of the present invention will become more apparent upon reading of the following non restrictive description of a preferred embodiment thereof, given by way of example only with reference to the accompanying drawings.

### BRIEF DESCRIPTION OF THE DRAWINGS

In the appended drawings:
Figure 1 is a schematic block diagram and flow chart combination illustrating the architecture and operation of a first embodiment of the request message directing method and system according to the present invention; and
Figure 2 is a schematic block diagram and flow chart combination illustrating the architecture and operation of a second embodiment of the request message directing method and system according to the present invention.

### DETAILED DESCRIPTION OF THE PREFERRED EMBODIMENT

Although the preferred embodiment of the present invention will be described with reference to domain name portability for subscriber addresses in a 3G network, it should be kept in mind the present invention is not limited to this particular application.

This preferred embodiment uses a DRS (Domain Redirect Server). This DRS comprises a database that holds all subscribers whose addresses contain bindings to old operators with whom they were previously affiliated. More specifically, the DRS includes storage for data correlating the old address of each subscriber comprising the domain name of an old operator to which the subscriber was previously affilated, to the new URL address of this subscriber containing the domain name of the new operator with which he now subscribes.

As will be seen in the following description, domains receiving incoming calls for subscribers that do not belong to that operator any more will have the URL address of the DRS be returned to the originator of the call (SIP redirect).

The call will then be routed to the DRS, which will perform the address resolution and return the new home address of the subscriber (URL).

The call will then be routed properly to the new home address CSCF and normal call processing will take place.

This solution provides flexibility regarding the extent of portability of a domain name.

In other words the geographical coverage for a portable domain can be a city or a whole country. In the former, once the subscriber moves to a new city, he will have to change address, while in the later the subscriber will be able to maintain his URL address so long as he subscribes to an operator within the country.

### Preferred embodiment 1:

In this embodiment, the domain name indicates a particular operator.

Also in this embodiment, client A calls client B. More specifically, this embodiment describes the DRS functionality when called client B has an URL address that has been ported from old address userB1@old-domain.com to new address userB2@new-domain.com, and client B wants to keep its old address. Thus, client A (user station A) will call client B (user station B) using the address userB1@old-domain.com. Just a word to mention that client B (user station B) also has an URL address with a domain name.

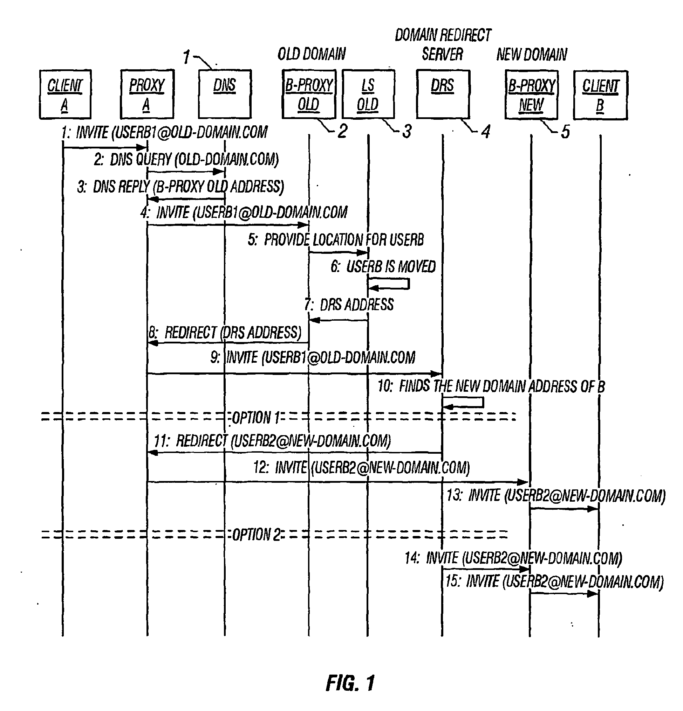

It should be kept in mind that the numeration of the following steps corresponds to the numeration of the different operation indicated in Figure 1 of the appended drawings.

### Step 1

User station A (Client A) sends in the IP space network a request message "INVITE (userB1@old-domain.com)" to proxy A that provides the routing service for user station A. This request message contains the old address of user station B (client B) userB1@old-domain.com.

Just a word to remind that a proxy is a proxy server implementing an intermediary program that acts as both a server and a client for the purpose of making requests on behalf of other clients. Requests are serviced internally of by passing them on, possibly after translation, to other servers. A proxy interprets and, if necessary, rewrites a request message before forwarding it.

### Step 2

Proxy A then sends a query message for old-domain.com to DNS (Domain Name System) 1.

The DNS 1 is, as well known to those of ordinary skill in the art, a distributed database that contains the names (URL addresses) and/or the IP addresses of every host that is accessible in the IP world. For addresses having the format user@host (as used by e-mail, tenet, SIP, etc), the DNS is concerned only with the "host" part, and provides the IP address of that host.

### Step 3

The DNS 1 replies to proxy A by indicating to proxy A the IP address of a proxy 2 associated to the domain name of the old address of user station B. Therefore, the DNS 1 comprises storage for an IP address of the proxy 2 in correlation with the domain name of the old address of the user station B.

The function of the DNS 1 is therefore to find the IP address of the proxy 2 from the domain name of the old address of the user station B, and to send the found IP address of the proxy 2 to the proxy A.

### Step 4

Proxy A sends the request message "INVITE (userB1@old-domain.com) to proxy 2.

### Step 5

The proxy 2 then sends a request for the location of user station B, corresponding to the old address userB1@old-domain.com to a LS (Location Service) 3 corresponding to proxy 2.

A location service is used by a SIP redirect or proxy server to obtain information about a callee's possible location(s). Location services are offered by location servers. Location servers may be collocated with a SIP server.

### Step 6

LS 3 finds that user station B has moved from the old URL address userB1@old-domain.com.

### Step 7

LS 3 gives to the proxy 2 the address of DRS 4. The DRS 4 is the above described Domain Redirect Server.

In fact, the DRS 4 comprises a database (storage) whose function is to keep a record which maps the advertised address (old address) of a user station to the address (new address) in the domain where the callee currently subscribes. Examples are the following:

| **Advertised address** | **Current address** |
|---|---|
| (old address) | (new address) |
| Sorin1@sympatico.ca | sorin25@cantel.ca |

When a client (subscriber) moves to another operator, the DRS administrator updates the record by changing the "current address" field. In this way, the client can keep its advertised address even after many changes of his user address (URL address).

### Step 8

The proxy 2 then returns a redirect command to proxy A, this command including the URL address of the DRS 4.

### Step 9

Proxy A sends the request message "INVITE (userB1@old-domain.com) to the DRS 4.

### Step 10

The DRS 4 then finds from the database the new URL address (userB2@new-domain.com) of user station B in response to the old URL address of user station B

The DRS 4 therefore embodies a new address finder supplied with the old address userB1@old-domain.com of user station B included in the request message and finding, in response to this old address and from the data stored in the DRS 4, the new address userB2@new-domain.com of user station B.

From Step 10, two different options are possible.

### Option 1:

### Step 11

The DRS 4 send to proxy A the redirect address for user station B, which is the new URL address of this user station userB2@new-domain.com.

### Step 12

Proxy A sends the request message "INVITE (userB2@new-domain.com)" to a third proxy 5 associated to the domain name of the new URL address of user station B.

### Step 13

The proxy 5 sends the request message to the new URL address of user station B (userB2@new-domain.com). User station B is thereby reached by user station A through its old URL address userB1@old-domain.com.

### Option 2:

### Step 14

DRS 4 sends the request message "INVITE (userB2@newdomain.com)" request directly to the proxy 5 corresponding to the domain name of the new IP address of client B (userB2@new-domain.com).

### Step 15

The proxy 5 directs the request message to the new URL address (userB2@new-domain.com) to user station B. User station B is thereby reached by user station A through its old URL address userB1@old-domain.com.

Therefore, in embodiment 1:
- the serial connection of proxy A, DNS 1, proxy A, proxy 2, LS 3, proxy 2 and proxy A constitutes a first transmission sub-system between the first user station and the DRS 4;
- the serial connection of proxy A providing the routing service for user station A and connected to this user station A, DNS 1 having storage for the IP address of proxy 2 associated to the domain name of the old URL address of user station B, and proxy 2 in combination with LS 3 constitutes a detector of the move of user station B from the old address userB1@old-domain.com;
- proxy 2, in combination with LS 3, constitutes a server address supplier connected to the above mentioned detector and giving, in response to detection of the move of user station B from the old address userB1@old-domain.com, the URL address of DRS 4;
- proxy A, in cooperation with LS 3, forms a first request transmission path supplied with both the request message "INVITE (userB1@old-domain.com) and the URL address of the DRS 4 from the server address supplier, connected to the DRS 4 and supplying, in response to receiving the address of the DRS, the request message to this DRS 4;
- according to option 1, proxy A and proxy 5 associated to the domain name of the new URL address userB2@new-domain.com form a second transmission sub-system between DRS 4 and user station B, this second transmission sub-system being supplied with the request message "INVITE (userB2@new-domain.com)" with the new address of user station B, and defining a second request message transmission path through which the request message "INVITE (userB2@new-domain.com)" is transmitted to the new address of user station B; and
- according to option 2, proxy 5 associated to the domain name of the new URL address of user station B forms this second transmission sub-system between the DRS 4 and user station B.

### Embodiment 2:

In this example, the domain name is generic. For example, the domain name can be the name of a city.

In this particular case, it is assumed that client B has got from the beginning a "portable" address, which is not tied to a specific operator. A possible example of such an address associated to a generic domain name may refer to the city where client B lives: userB1@city-domain.com (for example sorin.surdila@montreal.com). Even though userstation B has such an address, he can subscribe with any service provider in the city. Again, user station A calls user station B through the portable address userB1@city-domain.com.

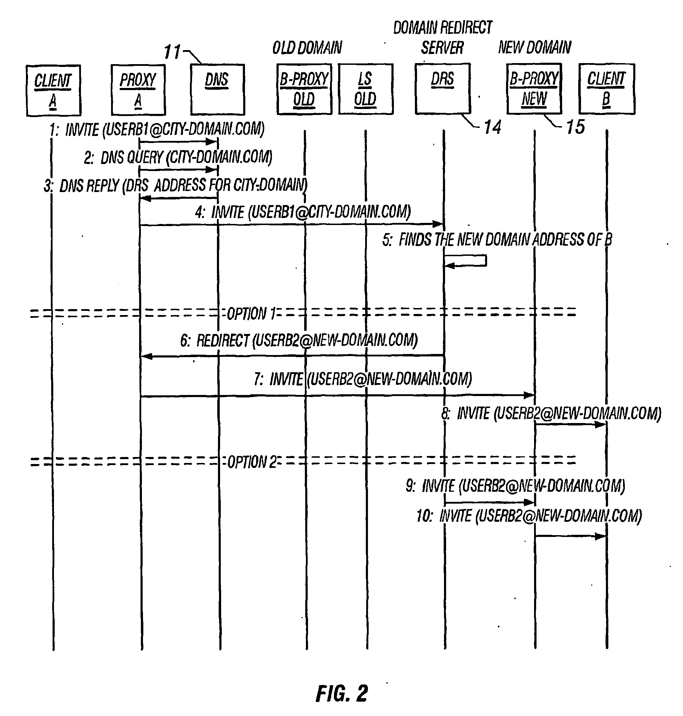

It should be kept in mind that the numeration of the following steps corresponds to the numeration of the different operations indicated in Figure 2 of the appended drawings.

### Step 1

User station A sends a request message "INVITE (userB1@city-domain.com) " in the IP space network to proxy A providing the routing service for user station A, using the portable address of client B (userB1@city-domain.com).

### Step 2

Proxy A then sends a query message for domain name city-domain.com to a DNS 11.

### Step 3

The DNS 11 finds that the portable URL address of user station B is associated with the generic domain name city-domain. For that purpose, the DNS 11 simply maps the generic domain name city-domain included in the portable URL address of user station B to the IP address of a DRS 14 assigned to this generic domain name.

Then, the DNS 11 replies to proxy A by indicating to proxy A the IP address of the DRS 14 assigned to the domain name city-domain.

### Step 4

Proxy A sends the request message "INVITE (userB1@city-domain.com), this request message including the portable URL address of user station B, to the IP address of the DRS 14.

The DRS 14 is a redirect server associated to the generic domain name city-domain and having storage for data correlating the portable address of user station B to a current URL address of user station B. An example is:

| **Advertised address** | **Current address** |
|---|---|
| (old address) | (new address) |
| sorin1@montreal.ca | sorin25@cantel.ca |

Every time a user station moves to a new current URL address, the DRS 14 is updated by correlating a portable URL address of this user station to the new current URL address thereof.

### Step 5

The DRS 14 finds the currrent URL address of user station B (userB2@new-domain.com) from the portable address userB1@city-domain.com.

Accordingly, the DRS 14 embodies a new address finder supplied with the portable address (userB1@city-domain.com) of user station B included in the request message and finds, in response to the portable address and from the data stored in the DRS 14, the current URL address (userB2@new-domain.com) of user station B.

From step 5, two different options are possible.

### Option 1:

### Step 6

The DRS 14 sends to proxy A the redirect address for user station B, which is the current URL address of this station (userB2@new-domain.com) as found in the DRS 14.

### Step 7

Proxy A sends the request message "INVITE (userB2@new-domain.com)" to proxy 15 associated to the domain name of the current URL address of user station B.

### Step 8

The proxy 15 sends the request message to the current address of user station B (userB2@new-domain.com) to thereby complete redirecting of the request message to the current URL address of the user station B found in the DRS 14.

User station B is thereby reached by user station A through its portable user address (URL address) userB1@city-domain.com.

### Option 2:

### Step 9

The DRS 14 sends the request message "INVITE (userB2@new-domain .com) directly to proxy 15 corresponding to the domain name of the current URL address of user station B (userB2@new-domain.com).

### Step 10

The proxy 15 sends the request message to the current address of user station B (userB2@new-domain.com). User station B is thereby reached by user station A through its portable address (userB1@city-domain.com). Redirection of the request message to the current address of the user station B found in the DRS 14 is thereby completed.

Therefore, in embodiment 2:
- the serial connection of proxy A, DNS 11, and proxy A constitutes a first transmission sub-system between the first user station and the DRS 14;
- the serial connection of proxy A providing the routing service for user station A and connected to this user station A, and the DNS 11 having storage for generic domain information forms a detector of the association of the portable address of user station B to the generic domain name city-domain;
- the DNS 11 embodies a server address supplier connected to the above mentioned association detector and giving, in response to detection of the association of the portable address of user station B with the generic domain name city-domain, the IP address of DRS 14;
- proxy A forms a first request transmission path supplied with both the request message "INVITE (useB1@city-domain.com) and the IP address of the DRS 14 from the server address supplier, connected to the DNS 11 and supplying, in response to receiving of the address of the DRS, the request message to this DRS 14;
- according to option 1 of embodiment 2, proxy A and proxy 15 associated to the domain name of the current URL address userB2@new-domain.com form a second transmission sub-system between DRS 14 and user station B, this second transmission sub-system being supplied with the request message "INVITE (userB2@new-domain.com)" with the new address of userstation B, and defining a second request message transmission path through which the request message "INVITE (userB2@new-domain.com)" is transmitted to the user station B; and
- according to option 2 of embodiment 2, proxy 5 associated to the domain name of the current URL address of user station B forms this second transmission sub-system between the DRS 14 and user station B.

3G subscribers expect the same services (and more) that 2G provides. Local number portability was the solution then. Domain name portability is the equivalent 3G solution.

The above described solution only extends the messages related to redirect SIP. No extra SIP messages are needed.

Although the solution is explained within the context of 3G calls which will feature multimedia services, it can apply to other applications as well such as e-mail. With e-mail, when a subscriber moves from a provider to another, his e-mail address normally changes. In that case the subscriber will be able to receive mail addressed using his old address while it is being delivered to his new e-mail server at the new provider.

Another application is Internet telephony including multimedia, etc. This solution can be applied to any application that uses an addressing scheme based on URL principles.

## Claims

1. A method for directing, in an IP space network, a request message from a first user station to a second user station that has been ported from an old user address to a new user address, comprising:
storing in a redirect server data correlating the old address of the second user station to the new address of said second user station, said redirect server having a redirect server address;
sending the request message from the first user station in the IP space network, said request message including the old address of the second user station;
detecting that said second user station has moved from said old address;
providing the redirect server address in response to detection that the second user station has moved from said old address;
directing the request message including the old address of the second user station to the redirect server address;
finding, in the redirect server and from the old address of the second user station, the new address of said second user station; and
redirecting the request message to the new address of the second user station found in the redirect server.

2. A method as recited in claim 1, wherein the old user address and the new user address are URL addresses each comprising a domain name, and wherein the redirect server is a domain redirect server.

3. A method as recited in claim 2, comprising, every time a user station is ported to a new URL address, updating the domain redirect server by correlating in said domain redirect server an old URL address of said user station to the new URL address of said user station.

4. A method as recited in claim 2, wherein the first user station has an URL address with a domain name, and wherein detecting that the second user station has moved from said old address comprises:
sending the request message from the first user station to a first proxy server providing routing service for the first user station;
sending from the first proxy server a query message including the domain name of the old address of the second user station to a domain name system;
finding, in the domain name system and from the query message, a proxy server address of a second proxy server associated to the domain name of the old URL address of the second user station;
sending the proxy server address of the second proxy server from the domain name system to the first proxy server;
sending the request message from the first proxy server to the second proxy server; and
finding, in the second proxy server, that the second user station has moved from the old URL address.

5. A method as recited in claim 4, wherein providing the redirect server address comprises:
supplying the redirect server address from the second proxy server to the first proxy server in response to finding, in the second proxy server, that the second user station has moved from the old URL address.

6. A method as recited in claim 5, wherein directing the request message to the redirect server address comprises sending from the first proxy server the request message to the domain redirect server.

7. A method as recited in claim 6, wherein redirecting the request message to the new URL address of the second user station found in the domain redirect server comprises:
sending the new URL address of the second user station found in the domain redirect server to the first proxy server,
sending the request message from the first proxy server to a third proxy server associated to the domain name of the new URL address of the second user station; and
sending the request message from the third proxy server to the second user station.

8. A method as recited in claim 6, wherein redirecting the request message to the new URL address of the second user station found in the domain redirect server comprises:
sending the request message from the domain redirect server to a third proxy server associated to the domain name of the new URL address of the second user station; and
sending the request message from the third proxy server to the second user station.

9. A system for directing, in an IP space network, a request message from a first user station to a second user station that has moved from an old user address to a new user address
with a redirect server having a redirect server address and adapted to store data correlating the old address of the second user station to the new address of said second user station,
wherein the first user station is adapted to send in the IP space network a request message intended for the second user station, the request message including the old address of the second user station and said system is adapted to redirect the request message to the redirect server address, wherein the redirect server address is provided in response to detection that the second user station has moved from the old address
and the redirect server is adapted to receive the request message, to find the new address based on the old address received in the request message, and to provide the new address of said second user station so that the request message is redirected to the new address of the second user station found in the redirect server.

10. A system as recited in claim 9, wherein the old user address and the new user address are URL addresses each comprising a domain name, and wherein the redirect server is a domain redirect server.

11. A system as recited in claim 10, wherein every time a user station is ported to a new URL address, the domain redirect server is updated by correlating in said domain redirect server an old URL address of said user station to the new URL address of said user station.

12. A system as recited in claim 10, wherein the first user station has an URL address with a domain name, the system further comprising:
a Domain Name System (DNS);
a first proxy server providing routing service for the first user station, the first proxy server receiving the request message from the first user station, and sends a query message including the domain name of the old address of the second user station to the DNS;
wherein the DNS finds, based on the query message, a proxy server address of a second proxy server associated to the domain name of the old URL address of the second user station, and retums the proxy server address of the second proxy server to the first proxy server, and the first proxy server sends the request message to the second proxy server which finds that the second user station has moved from the old URL address.

13. A system as recited in claim 12, wherein the second proxy server supplies a redirect server address of the redirect server to the first proxy server in response to finding by the second proxy server that the second user station has moved from the old user address.

14. A system as recited in claim 13. wherein for redirecting the request message to the new address of the second user station, the request message is sent from the first proxy server to the domain redirect server.

15. A system as recited In claim 14, further comprising:
a third proxy server associated to the domain name of the new URL address of the second user station:
wherein for redirecting the request message to the new URL address of the second user station found in the domain redirect server:
the new URL address of the second user station found in the domain redirect server is sent to the first proxy server,
the request message is sent from the first proxy server to a third proxy server associated to the domain name of the new URL address of the second user station; and
the request message Is sent from the third proxy server to the second user station.

16. A system as recited In claim 14, further comprising:
a third proxy server associated to the domain name of the new URL address of the second user station;
wherein redirecting the request message to the new URL address of the second user station found in the domain redirect server comprises:
sending the request message from the domain redirect server to a third proxy server associated to the domain name of the new URL address of the second user station; and
sending the request message from the third proxy server to the second user station.

## Patentansprüche

1. Verfahren zum Leiten einer Anforderungsnachricht von einer ersten Benutzerstation an eine zweite Benutzerstation, die von einer alten Benutzeradresse auf eine neue Benutzeradresse portiert worden ist, in einem IP-Raum-Netz, wobei das Verfahren Folgendes umfasst:
Speichern von Daten, die die alte Adresse der zweiten Benutzerstation mit der neuen Adresse der zweiten Benutzerstation korrelieren, in einem Umleitungsserver,
wobei dieser Umleitungsserver eine Umleitungsserveradresse aufweist;
Senden der Anforderungsnachricht von der ersten Benutzerstation in dem IP-Raum-Netz, wobei diese Anforderungsnachricht die alte Adresse der zweiten Benutzerstation enthält;
Erfassen, dass die zweite Benutzerstation sich von der alten Adresse wegbewegt hat;
Bereitstellen der Umleitungsserveradresse als Antwort auf die Erfassung, dass die zweite Benutzerstation sich von der alten Adresse wegbewegt hat;
Leiten der Anforderungsnachricht, die die alte Adresse der zweiten Benutzerstation enthält, an die Umleitungsserveradresse;
Finden der neuen Adresse der zweiten Benutzerstation in dem Umleitungsserver und von der alten Adresse der zweiten Benutzerstation ausgehend und
Umleiten der Anforderungsnachricht an die neue Adresse der zweiten Benutzerstation, die in dem Umleitungsserver gefunden wurde.

2. Verfahren nach Anspruch 1, wobei die alte Benutzeradresse und die neue Benutzeradresse URL-Adressen sind, die jeweils einen Domänennamen umfassen, und wobei der Umleitungsserver ein Domänenumleitungsserver ist.

3. Verfahren nach Anspruch 2, das das Aktualisieren des Domänenumleitungsservers jedes Mal, wenn eine Benutzerstation auf eine neue URL-Adresse portiert wird, durch Korrelieren einer alten URL-Adresse der Benutzerstation mit der neuen URL-Adresse der Benutzerstation in dem Domänenumleitungsserver umfasst.

4. Verfahren nach Anspruch 2, wobei die erste Benutzerstation eine URL-Adresse mit einem Domänennamen aufweist und wobei das Erfassen, dass die zweite Benutzerstation sich von der alten Adresse wegbewegt hat, Folgendes umfasst:
Senden der Anforderungsnachricht von der ersten Benutzerstation an einen ersten Proxyserver, der einen Routingdienst für die erste Benutzerstation bereitstellt;
Senden einer Abfragenachricht, die den Domänennamen der alten Adresse der zweiten Benutzerstation enthält, von dem ersten Proxyserver an ein Domänennamensystem;
Finden einer Proxyserveradresse eines zweiten Proxyservers, der mit dem Domänennamen der alten URL-Adresse der zweiten Benutzerstation assoziiert ist, in dem Domänennamensystem und von der Abfragenachricht ausgehend;
Senden der Proxyserveradresse des zweiten Proxyservers von dem Domänennamensystem an den ersten Proxyserver;
Senden der Anforderungsnachricht von dem ersten Proxyserver an den zweiten Proxyserver und
Feststellen in dem zweiten Proxyserver, dass die zweite Benutzerstation sich von der alten URL-Adresse wegbewegt hat.

5. Verfahren nach Anspruch 4, wobei das Bereitstellen der Umleitungsserveradresse Folgendes umfasst:
Liefern der Umleitungsserveradresse von dem zweiten Proxyserver an den ersten Proxyserver als Antwort auf das Feststellen in dem zweiten Proxyserver, dass die zweite Benutzerstation sich von der alten URL-Adresse wegbewegt hat.

6. Verfahren nach Anspruch 5, wobei das Leiten der Anforderungsnachricht an die Umleitungsserveradresse das Senden der Anforderungsnachricht von dem ersten Proxyserver an den Domänenumleitungsserver umfasst.

7. Verfahren nach Anspruch 6, wobei das Umleiten der Anforderungsnachricht an die neue URL-Adresse der zweiten Benutzerstation, die in dem Domänenumleitungsserver gefunden wurde, Folgendes umfasst:
Senden der neuen URL-Adresse der zweiten Benutzerstation, die in dem Domänenumleitungsserver gefunden wurde, an den ersten Proxyserver;
Senden der Anforderungsnachricht von dem ersten Proxyserver an einen dritten Proxyserver, der mit dem Domänennamen der neuen URL-Adresse der zweiten Benutzerstation assoziiert ist; und
Senden der Anforderungsnachricht von dem dritten Proxyserver an die zweite Benutzerstation.

8. Verfahren nach Anspruch 6, wobei das Umleiten der Anforderungsnachricht an die neue URL-Adresse der zweiten Benutzerstation, die in dem Domänenumleitungsserver gefunden wurde, Folgendes umfasst:
Senden der Anforderungsnachricht von dem Domänenumleitungsserver an einen dritten Proxyserver, der mit dem Domänennamen der neuen URL-Adresse der zweiten Benutzerstation assoziiert ist; und
Senden der Anforderungsnachricht von dem dritten Proxyserver an die zweite Benutzerstation.

9. System zum Leiten einer Anforderungsnachricht von einer ersten Benutzerstation an eine zweite Benutzerstation, die von einer alten Benutzeradresse zu einer neuen Benutzeradresse gewechselt ist, in einem IP-Raum-Netz,
mit einem Umleitungsserver, der eine Umleitungsserveradresse aufweist und dazu eingerichtet ist, Daten zu speichern, die die alte Adresse der zweiten Benutzerstation mit der neuen Adresse der zweiten Benutzerstation korrelieren;
wobei die erste Benutzerstation dazu eingerichtet ist, in dem IP-Raum-Netz eine Anforderungsnachricht zu senden, die für die zweite Benutzerstation gedacht ist, wobei die Anforderungsnachricht die alte Adresse der zweiten Benutzerstation enthält, und das System dazu eingerichtet ist, die Anforderungsnachricht an die Umleitungsserveradresse umzuleiten, wobei die Umleitungsserveradresse als Antwort auf die Erfassung, dass die zweite Benutzerstation sich von der alten Adresse wegbewegt hat, bereitgestellt wird,
und der Umleitungsserver dazu eingerichtet ist, die Anforderungsnachricht zu empfangen, die neue Adresse basierend auf der alten Adresse, die in der Anforderungsnachricht empfangen wurde, zu finden und die neue Adresse der zweiten Benutzerstation bereitzustellen, so dass die Anforderungsnachricht an die neue Adresse der zweiten Benutzerstation, die in dem Umleitungsserver gefunden wurde, umgeleitet wird.

10. System nach Anspruch 9, wobei die alte Benutzeradresse und die neue Benutzeradresse URL-Adressen sind, die jeweils einen Domänennamen umfassen, und wobei der Umleitungsserver ein Domänenumleitungsserver ist.

11. System nach Anspruch 10, wobei jedes Mal, wenn eine Benutzerstation auf eine neue URL-Adresse portiert wird, der Domänenumleitungsserver durch Korrelieren einer alten URL-Adresse der Benutzerstation mit der neuen URL-Adresse der Benutzerstation in dem Domänenumleitungsserver aktualisiert wird.

12. System nach Anspruch 10, wobei die erste Benutzerstation eine URL-Adresse mit einem Domänennamen aufweist, wobei das System weiterhin Folgendes umfasst:
ein Domänennamensystem (DNS);
einen ersten Proxyserver, der einen Routingdienst für die erste Benutzerstation bereitstellt, wobei der erste Proxyserver die Anforderungsnachricht von der ersten Benutzerstation empfängt und eine Abfragenachricht, die den Domänennamen der alten Adresse der zweiten Benutzerstation enthält, an das DNS sendet;
wobei das DNS basierend auf der Abfragenachricht eine Proxyserveradresse eines zweiten Proxyservers findet, der mit dem Domänennamen der alten URL-Adresse der zweiten Benutzerstation assoziiert ist, und die Prpxyserveradresse des zweiten Proxyservers an den ersten Proxyserver zurücksendet und der erste Proxyserver die Anforderungsnachricht an den zweiten Proxyserver sendet, der feststellt, dass die zweite Benutzerstation sich von der alten URL-Adresse wegbewegt hat.

13. System nach Anspruch 12, wobei der zweite Proxyserver dem ersten Proxyserver eine Umleitungsserveradresse des Umleitungsservers liefert als Antwort auf das Feststellen von dem zweiten Proxyserver, dass die zweite Benutzerstation sich von der alten Benutzeradresse wegbewegt hat.

14. System nach Anspruch 13, wobei zum Umleiten der Anforderungsnachricht an die neue Adresse der zweiten Benutzerstation die Anforderungsnachricht von dem ersten Proxyserver an den Domänenumleitungsserver gesendet wird.

15. System nach Anspruch 14, das weiterhin Folgendes umfasst:
einen dritten Proxyserver, der mit dem Domänennamen der neuen URL-Adresse der zweiten Benutzerstation asspzüert ist;
wobei zum Umleiten der Anforderungsnachricht an die neue URL-Adresse der zweiten Benutzerstation, die in dem Domänenumleitungsserver gefunden wurde:
die neue URL-Adresse der zweiten Benutzerstation, die in dem Domänenumleitungsserver gefunden wurde, an den ersten Proxyserver gesendet wird;
die Anforderungsnachricht von dem ersten Proxyserver an einen dritten Proxyserver, der mit dem Domänennamen der neuen URL-Adresse der zweiten Benutzerstation assoziiert ist, gesendet wird und
die Anforderungsnachricht von dem dritten Proxyserver an die zweite Benutzerstation gesendet wird.

16. System nach Anspruch 14, das weiterhin Folgendes umfasst:
einen dritten Proxyserver, der mit dem Domänennamen der neuen URL-Adresse der zweiten Benutzerstation assoziiert ist;
wobei das Umleiten der Anforderungsnachricht an die neue URL-Adresse der zweiten Benutzerstation, die in dem Domänenumleitungsserver gefunden wurde, Folgendes umfasst:
Senden der Anforderungsnachricht von dem Domänenumleitungsserver an einen dritten Proxyserver, der mit dem Domänennamen der neuen URL-Adresse der zweiten Benutzerstation assoziiert ist; und
Senden der Anforderungsnachricht von dem dritten Proxyserver an die zweite Benutzerstation.

## Revendications

1. Procédé de direction, dans un réseau d'espace IP, d'un message de demande d'une première station d'utilisateur vers une seconde station d'utilisateur qui a été portée d'une ancienne adresse d'utilisateur vers une nouvelle adresse d'utilisateur, consistant à :
mémoriser dans un serveur de redirection des données corrélant l'ancienne adresse de la seconde station d'utilisateur avec la nouvelle adresse de ladite seconde station d'utilisateur, ledit serveur de redirection ayant une adresse de serveur de redirection ;
envoyer le message de demande de la première station d'utilisateur dans le réseau d'espace IP, ledit message de demande incluant l'adresse ancienne de la seconde station d'utilisateur ; détecter que ladite seconde station d'utilisateur s'est déplacée de ladite ancienne adresse ;
fournir l'adresse du serveur de redirection en réponse à la détection que la seconde station d'utilisateur s'est déplacée de ladite adresse ancienne ;
diriger le message de demande incluant l'ancienne adresse de la seconde station d'utilisateur vers l'adresse du serveur de redirection ;
trouver, dans le serveur de redirection et à partir de l'ancienne adresse de la seconde station d'utilisateur, la nouvelle adresse de ladite seconde station d'utilisateur ; et
rediriger le message de demande vers la nouvelle adresse de la seconde station d'utilisateur trouvée dans le serveur de redirection.

2. Procédé selon la revendication 1, dans lequel l'ancienne adresse d'utilisateur et la nouvelle adresse d'utilisateur sont des adresses URL comprenant chacune un nom de domaine et dans lequel le serveur de redirection est un serveur de redirection de domaine.

3. Procédé selon la revendication 2, comprenant, chaque fois qu'une station d'utilisateur est portée vers une nouvelle adresse URL, la mise à jour du serveur de redirection de domaine en corrélant dans ledit serveur de redirection de domaine une ancienne adresse URL de ladite station d'utilisateur avec la nouvelle adresse URL de ladite station d'utilisateur.

4. Procédé selon la revendication 2, dans lequel la première station d'utilisateur possède une adresse URL avec un nom de domaine et dans lequel la détection que la seconde station d'utilisateur s'est déplacée de ladite adresse ancienne consiste à :
envoyer le message de demande de la première station d'utilisateur vers un premier serveur mandataire fournissant un service de routage à la première station d'utilisateur ;
envoyer dudit premier serveur mandataire un message d'interrogation incluant le nom de domaine de l'ancienne adresse de la seconde station d'utilisateur à un système de noms de domaine ;
trouver, dans le système de noms de domaine et à partir du message d'interrogation, une adresse de serveur mandataire d'un second serveur mandataire associé au nom de domaine de l'ancienne adresse URL de la seconde station d'utilisateur ;
envoyer l'adresse du serveur mandataire du second serveur mandataire du système de noms de domaine au premier serveur mandataire ;
envoyer le message de demande du premier serveur mandataire au second serveur mandataire ; et
trouver, dans le second serveur mandataire, que la seconde station d'utilisateur s'est déplacée de l'ancienne adresse URL.

5. Procédé selon la revendication 4, dans lequel la fourniture de l'adresse du serveur de redirection consiste à :.
fournir l'adresse du serveur de redirection du second serveur mandataire au premier serveur mandataire en réponse à l'étape où il est trouvé que, dans le second serveur mandataire, la seconde station d'utilisateur s'est déplacée de l'ancienne adresse URL.

6. Procédé selon la revendication 5, dans lequel diriger le message de demande vers l'adresse du serveur de redirection consiste à envoyer le message de demande du premier serveur mandataire au serveur de redirection de domaine.

7. Procédé selon la revendication 6, dans lequel la redirection du message de demande vers la nouvelle adresse URL de la seconde station d'utilisateur trouvée dans le serveur de redirection de domaine consiste à :
envoyer la nouvelle adresse URL de la seconde station d'utilisateur trouvée dans le serveur de redirection de domaine vers le premier serveur mandataire ;
envoyer le message de demande du premier serveur mandataire à un troisième serveur mandataire associé au nom de domaine de la nouvelle adresse URL de la seconde station d'utilisateur ; et
envoyer le message de demande du troisième serveur mandataire à la seconde station d'utilisateur.

8. Procédé selon la revendication 6, dans lequel la redirection du message de demande vers la nouvelle adresse URL de la seconde station d'utilisateur trouvée dans le serveur de redirection de domaine consiste à :
envoyer le message de demande du serveur de redirection de domaine à un troisième serveur mandataire associé au nom de domaine de la nouvelle adresse URL de la seconde station d'utilisateur ; et
envoyer le message de demande du troisième serveur mandataire à la seconde station d'utilisateur.

9. Système pour diriger, dans un réseau spatial IP, un message de demande d'une première station d'utilisateur vers une seconde station d'utilisateur qui s'est déplacée d'une ancienne adresse d'utilisateur vers une nouvelle adresse d'utilisateur
comportant un serveur de redirection ayant une adresse de serveur de redirection et adapté afin de mémoriser des données corrélant l'adresse ancienne de la seconde station d'utilisateur avec la nouvelle adresse de ladite seconde station d'utilisateur,
dans lequel la première station d'utilisateur est adaptée afin d'envoyer dans le réseau d'espace IP un message de demande destiné à la seconde station d'utilisateur, le message de demande incluant l'ancienne adresse de la seconde station d'utilisateur et ledit système est adapté afin de rediriger le message de demande vers l'adresse du serveur de redirection, moyennant quoi l'adresse du serveur de redirection est fournie en réponse à la détection que la seconde station d'utilisateur s'est déplacée de l'ancienne adresse,
et le serveur de redirection est adapté afin de recevoir le message de demande, de trouver la nouvelle adresse sur la base de l'adresse ancienne reçue dans le message de demande et de fournir la nouvelle adresse de ladite seconde station d'utilisateur, de telle sorte que le message de demande soit redirigé vers la nouvelle adresse de la seconde station d'utilisateur trouvée dans le serveur de redirection.

10. Système selon la revendication 9, dans lequel l'ancienne adresse d'utilisateur et la nouvelle adresse d'utilisateur sont des adresses URL comprenant chacune un nom de domaine et dans lequel le serveur de redirection est un serveur de redirection de domaine.

11. Système selon la revendication 10, dans lequel, chaque fois qu'une station d'utilisateur est portée vers une nouvelle adresse URL, le serveur de redirection de domaine est mis à jour en corrélant dans ledit serveur de redirection de domaine une ancienne adresse URL de ladite station d'utilisateur avec la nouvelle adresse URL de ladite station d'utilisateur.

12. Système selon la revendication 10, dans lequel la première station d'utilisateur possède une adresse URL avec un nom de domaine, le système comprenant en outre :
un système de noms de domaine (DNS) ;
un premier serveur mandataire fournissant un service de routage à la première station d'utilisateur, le premier serveur mandataire recevant le message de demande de la première station d'utilisateur et envoyant un message d'interrogation incluant le nom de domaine de l'ancienne adresse de la seconde station d'utilisateur au DNS ;
dans lequel le DNS trouve, sur la base du message d'interrogation, une adresse de serveur mandataire du second serveur mandataire associée au nom de domaine de l'ancienne adresse URL de la seconde station d'utilisateur, et renvoie l'adresse du serveur mandataire du second serveur mandataire au premier serveur mandataire et le premier serveur mandataire envoie le message de demande au second serveur mandataire qui trouve que la seconde station d'utilisateur s'est déplacée de l'ancienne adresse URL.

13. Système selon la revendication 12, dans lequel le second serveur mandataire fournit une adresse de serveur de redirection du serveur de redirection au premier serveur mandataire en réponse à l'étape où il est trouvé par le second serveur mandataire que la seconde station d'utilisateur s'est déplacée de l'ancienne adresse d'utilisateur.

14. Système selon la revendication 13, dans lequel, pour rediriger le message de demande vers la nouvelle adresse de la seconde station d'utilisateur, le message de demande est envoyé du premier serveur mandataire au serveur de redirection de domaine.

15. Système selon la revendication 14, comprenant en outre :
un troisième serveur mandataire associé au nom de domaine de la nouvelle adresse URL de la seconde station d'utilisateur ;
vers la nouvelle adresse URL de la seconde station d'utilisateur trouvée dans le serveur de redirection de domaine :
la nouvelle adresse URL de la seconde station d'utilisateur trouvée dans le serveur de redirection de domaine est envoyée au premier serveur mandataire
le message de demande est envoyé du premier serveur mandataire à un troisième serveur mandataire associé au nom de domaine de la nouvelle adresse URL de la seconde station d'utilisateur ; et
le message de demande est envoyé du troisième serveur mandataire à la seconde station d'utilisateur.

16. Système selon la revendication 14, comprenant en outre :
un troisième serveur mandataire associé au nom de domaine de la nouvelle adresse URL de la seconde station d'utilisateur ;
dans lequel la redirection du message de demande vers la nouvelle adresse URL de la seconde station d'utilisateur trouvée dans le serveur de redirection de domaine consiste à :
envoyer le message de demande du serveur de redirection de domaine vers un troisième serveur mandataire associé au nom de domaine de la nouvelle adresse URL de la seconde station d'utilisateur ; et
envoyer le message de demande du troisième serveur mandataire à la seconde station d'utilisateur.
